(19) Europäisches Patentamt
European Patent Office
Office européen des brevets

(11) **EP 4 578 971 A1**

(12) **EUROPEAN PATENT APPLICATION**
published in accordance with Art. 153(4) EPC

(43) Date of publication:
**02.07.2025 Bulletin 2025/27**

(21) Application number: **23857019.6**

(22) Date of filing: **13.07.2023**

(51) International Patent Classification (IPC):
**C22C 19/03** (2006.01)   **C22F 1/00** (2006.01)
**C22F 1/10** (2006.01)

(52) Cooperative Patent Classification (CPC):
**C22C 19/03; C22F 1/00; C22F 1/10**

(86) International application number:
**PCT/JP2023/025822**

(87) International publication number:
**WO 2024/042902 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 JP 2022134399
03.03.2023 JP 2023033241**

(71) Applicant: **Proterial, Ltd.
Tokyo 135-0061 (JP)**

(72) Inventors:
• **IBARA, Munehito**
**Tokyo 135-0061 (JP)**
• **TAKUWA, Moemi**
**Tokyo 135-0061 (JP)**
• **MURATA, Hideo**
**Tokyo 135-0061 (JP)**
• **SAKAI, Hirokazu**
**Tokyo 135-0061 (JP)**

(74) Representative: **HGF
HGF Limited
1 City Walk
Leeds LS11 9DX (GB)**

(54) **NI-BASED ALLOY HAVING EXCELLENT HIGH-TEMPERATURE OXIDATION RESISTANCE**

(57)    To provide a Ni-based alloy having excellent high-temperature oxidation resistance even though the Cr content is reduced. The Ni-based alloy comprises, by mass, 2.0% to 5.0% of Al, 0.1% to 2.5% of Si, 0.1% to 1.5% of Mn, 0.4% to 3.0% of V, 0.001% to 0.05 % of B, 0.001% to 0.1% of Zr, and the balance of Ni with inevitable impurities. The Ni-based alloy further comprises 2.0% or less of Mo in addition to this composition. Such a Ni-based alloy is also excellent in hot workability.

## FIG. 1

EP 4 578 971 A1

## Description

TECHNICAL FIELD

The present invention relates to a Ni-based alloy.

BACKGROUND ART

In general, Ni-based alloys having excellent high-temperature oxidation resistance are used in members such as trays or the like used in oxidation and firing furnaces to prevent the contamination of products with oxide scale produced by the members. As such Ni-based alloys, for example, a Ni-based alloy containing, by mass, 2.0% to 5.0% of Al, 0.1% to 2.5% of Si, 0.8% to 4.0% of Cr, 0.1% to 1.5% of Mn, 0.001% to 0.01% of B, 0.001% to 0.1% of Zr, and the balance being Ni and inevitable impurities has been made (Patent Document 1). Another Ni-based alloy, for example, containing, by mass, 2.0% to 5.0% of Al, 0.1% to 2.5% of Si, 0.1% to 1.5% of Mn, 0.001% to 0.01% of B, 0.001% to 0.1% of Zr, and the balance being Ni and inevitable impurities has also been made as such a Ni-based ally (Patent Document 2).

The Ni-based alloys of Patent Documents 1 and 2 are excellent in high-temperature oxidation resistance and, accordingly, are suitable as an alloy that forms the members such as chip capacitor firing trays, and lithium electrode positive electrode material firing trays. The Ni-based alloy of Patent Document 1 is also suitable as an alloy that forms CVD apparatus members, PVD apparatus members, LCD apparatus members, semiconductor manufacturing apparatus members, and the like.

REFERENCE DOCUMENT LIST

PATENT DOCUMENTS

| Patent Document 1: | JP 2014-080675 A |
| Patent Document 2: | JP 2015-045035 A |

SUMMARY OF THE INVENTION

PROBLEM TO BE SOLVED BY THE INVENTION

The excellent high-temperature oxidation resistance of the Ni-based alloy of Patent Document 1 is ensured by the effect of containing Cr, as well as others. However, in a process in which the alloy of Patent Document 1 is used in an apparatus or the like for producing a lithium battery positive electrode material, if the positive electrode material is contaminated with Cr-containing oxide scale, the properties of the positive electrode material may be degraded and result in a reduced service life of the lithium battery. It is, therefore, desirable that the Cr content can be reduced. The Ni-based alloy of Patent Document 2 is effective in this respect but allows for improvement in terms of high-temperature oxidation resistance.

If the high-temperature oxidation resistance of Patent Document 1 is maintained even with reduced Cr content, or even with no Cr content, of a Ni-based alloy, such a Ni-based alloy would be beneficial in terms of the above.

An object of the present invention is to provide a Ni-based alloy that can maintain excellent high-temperature oxidation resistance even though the Cr content is reduced (or no Cr is added).

MEANS FOR SOLVING THE PROBLEM

Specifically, the present invention is a Ni-based alloy containing, by mass, 2.0% to 5.0% of Al, 0.1% to 2.5% of Si, 0.1% to 1.5% of Mn, 0.4% to 3.0% of V, 0.001% to 0.05% of B, 0.001% to 0.1% of Zr, and the balance of Ni with inevitable impurities. Preferably, the V content is 1.0% to 3.0%. The Ni-based alloy further contains 2.0% or less of Mo in addition to such an element composition.

EFFECTS OF THE INVENTION

The present invention enables a Ni-based alloy to maintain excellent high-temperature oxidation resistance even though the Cr content is reduced (or even no Cr is added).

BRIEF DESCRIPTION OF THE DRAWINGS

FIG. 1 is a representation of repetitive oxidation tests conducted in an Example.
FIG. 2 is a plot of results of the repetitive oxidation tests conducted in an Example.
FIG. 3 is a plot of results of the repetitive oxidation tests conducted in an Example.
FIG. 4 is a plot of results of the repetitive oxidation tests conducted in an Example.
FIG. 5 is a plot of results of the repetitive oxidation tests conducted in an Example.
FIG. 6 is a plot of results of tensile tests conducted in an Example.
FIG. 7 is a plot of results of tensile tests conducted in an Example.

MODE FOR CARRYING OUT THE INVENTION

The present invention is characterized by the finding of a Ni-based alloy that can maintain the high-temperature oxidation resistance of Patent Document 1 even though the Cr content is reduced, or no Cr is added. The Ni-based alloy of the present invention will be described in detail in terms of the reasons for the numerical limitation of the constituent elements in the composition.

Al:

Al is an element that forms an alumina coating over the surface of the Ni-based alloy to increase the high-temperature oxidation resistance and reduce the production of oxide scale. However, excessively high Al content causes γ' phases ($Ni_3Al$ intermetallic compound) to precipitate in the matrix of the Ni-based alloy and results in reduced hot workability, making it difficult to work the alloy.
Accordingly, the Al content is 2.0% to 5.0% by mass (hereinafter simply expressed as "%"). Preferably, it is 2.5% or more, more preferably 3.0% or more, and still more preferably 3.5% or more. Also, preferably, it is 4.7% or less, more preferably 4.5% or less, and still more preferably 4.2% or less.

Si:

Si is an element that increases high-temperature oxidation resistance. However, excessively high Si content causes the alloy to crack easily during hot working. Accordingly, the Si content is 0.1% to 2.5%. Preferably, it is 0.3% or more, more preferably 0.6% or more, and still more preferably 0.8% or more. Also, preferably, it is 2.2% or less, more preferably 1.9% or less, and still more preferably 1.7% or less.

Mn:

Mn is an element that increases high-temperature strength. However, excessively high Mn content reduces high-temperature oxidation resistance. Accordingly, the Mn content is 0.1% to 1.5%. Preferably, it is 0.2% or more, more preferably 0.3% or more, and still more preferably 0.4% or more. Also, preferably, it is 1.2% or less, more preferably 0.9% or less, and still more preferably 0.6% or less.

V:

V is an element that increases high-temperature oxidation resistance and is, therefore, a useful alternative to Cr. However, excessively high V content increases the amount of precipitation of γ' phases ($Ni_3Al$ intermetallic compound) and results in reduced hot workability. Accordingly, the V content is 0.4% to 3.0%. Preferably, it is 0.7% or more, more preferably 0.9% or more, and still more preferably 1.0% or more. Further preferably, it is 1.1% or more, still further preferably 1.2% or more, and yet further preferably 1.3% or more. Also, preferably, it is 2.7% or less, more preferably 2.4% or less, and still more preferably 2.1% or less. Further preferably, it is 1.8% or less, still further preferably 1.6% or less, and yet further preferably 1.4% or less.

B and Zr:

B and Zr improve the hot forgeability of the Ni-based alloy in coexistence. This is probably because the coexistence of B and Zr strengthens the grain boundaries of the Ni-based alloy and, thus, reduces the grain boundary rupture during hot forging.

Also, excessively low B content is not effective in the above improvement as desired, whereas excessively high B content conversely degrades the hot forgeability. Accordingly, the B content is 0.001% to 0.05%. Preferably, it is 0.003% or more, more preferably 0.005% or more, and still more preferably 0.007% or more. Also, preferably, it is 0.04% or less, more preferably 0.03% or less, still more preferably 0.02 % or less, and still further preferably 0.01% or less.

Similarly, excessively low Zr content is not effective in the above improvement as desired, whereas excessively high Zr content conversely degrades the hot forgeability. Accordingly, the Zr content is 0.001% to 0.1%. Preferably, it is 0.005% or more, more preferably 0.007% or more, still more preferably 0.01% or more, and still further preferably 0.03% or more. Also, preferably, it is 0.08% or less, more preferably 0.07% or less, still more preferably 0.06% or less, and still further preferably 0.04% or less.

Mo:

Mo contributes to the improvement of high-temperature oxidation resistance and high-temperature strength and is, therefore, an element that can be added as needed. Since adding a trace amount of Mo can further increase high-temperature oxidation resistance, Mo is a useful element as an alternative to Cr. However, excessively high Mo content increases high-temperature strength and accordingly reduces hot workability. Therefore, the Mo content, if added, is 2.0% or less. Preferably, it is 1.6% or less, more preferably 1.2% or less, still more preferably 0.8% or less, and still further preferably 0.6% or less. Also, the Mo content, if added, is preferably 0.1% or more, more preferably 0.2% or more, and still more preferably 0.3% or more.

The Ni-based alloy of the present invention contains the above-described elements, and the balance can be Ni and inevitable impurities. In such implementation, Cr may be added, provided that it is in a small amount, for example, 0% to 0.5%. Preferably, the Cr content is 0.3% or less, more preferably 0.1% or less.

The Ni-based alloy of the present invention is excellent in hot workability as well as high-temperature oxidation resistance and, therefore, can be provided in the form of plates, wires, or tubes by applying hot working to the ingot in various manners, such as forging and rolling. These materials are worked into jigs and members, for example, members such as chip capacitor firing trays, lithium battery positive electrode material firing trays, CVD apparatus members, PVD apparatus members, LCD apparatus members, and semiconductor manufacturing apparatus members. The Ni-based alloy can also be used for various applications requiring high-temperature oxidation resistance and hot forgeability, such as oxidation furnace members, firing furnace members, muffles for firing silver-tin, process jigs for manufacturing cemented carbide, and retorts for firing special powder (e.g., LED materials).

EXAMPLE 1

Materials were blended in predetermined proportions, melted in a vacuum melting furnace, and then cast to produce 10 kg of a Ni-based alloy ingot having the alloy composition presented in Table 1. Alloy 10 corresponds to the Ni-based alloy of Patent Document 1. Alloy 11 corresponds to the Ni-based alloy of Patent Document 2.

Subsequently, the resulting ingot was heated to a temperature of 1200°C and, in this state, subjected to hot forging to produce a plate with dimensions of 25 mm in thickness and 50 mm in width. At this time, the temperature of the resulting plate was about 800°C at the end of hot forging. All the Ni-based alloys could be forged to the above dimensions without cracking or other problems. The resulting forged material was further worked to a length of 100 mm by machining.

Table 1

| No. | Element composition (mass%) | | | | | | | | | Note |
|---|---|---|---|---|---|---|---|---|---|---|
| | Al | Si | Cr | Mn | V | B | Zr | Mo | Ni* | |
| 1 | 3.9 | 1.4 | - | 0.4 | 1.4 | 0.004 | 0.01 | - | Bal. | Invention Example |
| 2 | 2.9 | 1.3 | - | 0.4 | 1.4 | 0.004 | 0.01 | - | Bal. | |
| 3 | 2.9 | 1.1 | - | 0.4 | 1.4 | 0.004 | 0.01 | - | Bal. | |
| 4 | 3.9 | 1.4 | - | 0.4 | 1.4 | 0.004 | 0.01 | 0.5 | Bal. | |
| 5 | 3.8 | 1.4 | - | 0.3 | 1.9 | 0.003 | 0.01 | - | Bal. | |
| 10 | 3.9 | 1.5 | 2.0 | 0.5 | - | 0.003 | 0.01 | - | Bal. | Comparative Example |
| 11 | 4.0 | 1.4 | - | 0.5 | - | 0.003 | 0.01 | - | Bal. | |
| **\* Inclusive of impurities** | | | | | | | | | | |

The above-prepared Ni-based alloys 1 to 5, 10, and 11 were subjected to repetitive oxidation tests in the following manner to evaluate the high-temperature oxidation resistance.

First, the above-produced plates with a thickness t of 25 mm were worked into test pieces, each measuring 15 mm $\times$ 15 mm $\times$ 10 mm t. Then, the surface of each test piece was polished and finally finished with a #300 water-resistant emery paper. The polished test piece was degreased using ultrasonic cleaning by being immersed in a metal cleaner and a Fine Solve (both produced by Sankyo Chemical Co., Ltd.) and ethanol in this order. Then, the surface area ($A_0$) was calculated by measuring the entire surface of the test piece, and the initial mass ($W_0$) before the test was also measured.

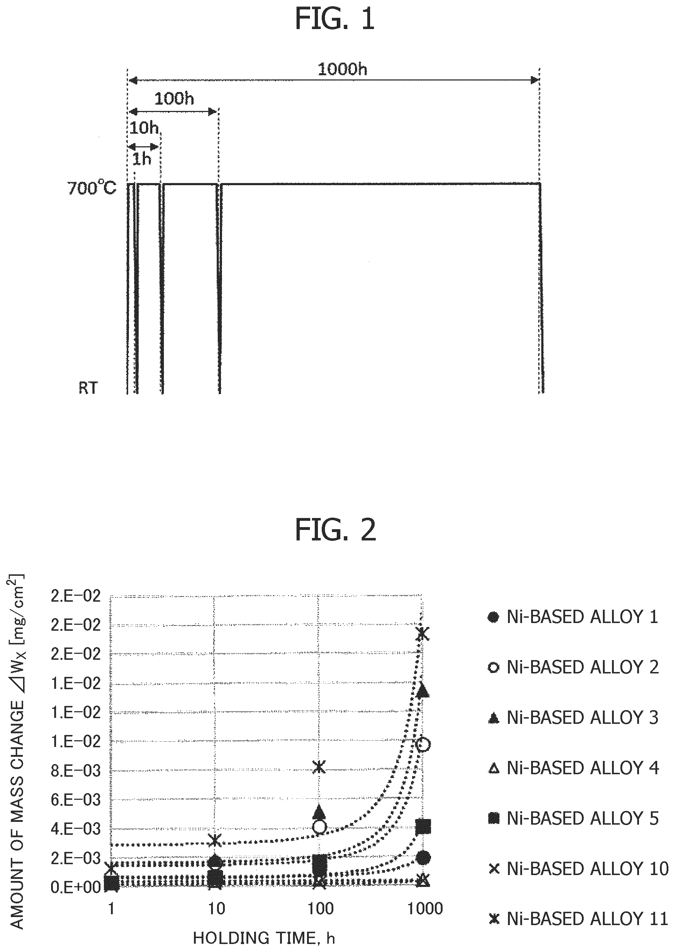

Subsequently, each test piece of Ni-based alloys 1 to 5, 10, and 11 was subjected to repetitive oxidation tests by repeating cycles of heating, holding, and cooling in the air. The tests were conducted at 700°C, and the holding time was set at 1 h, 10 h, 100 h, and 1000 h on a logarithmic scale. FIG. 1 illustrates a thermal cycle of the test conditions ("RT" in FIG. 1 denotes room temperature).

The mass ($W_x$) of the test pieces was measured at each end of the thermal cycles (number of repetitions X = 1 to 4) in FIG. 1. Furthermore, the amount of mass change ($\Delta W_x$) per surface area was calculated by subtracting the initial mass ($W_0$) from the mass ($W_x$) and dividing the resulting value by the surface area ($A_0$). The amount of mass change ($\Delta W_x$) increases according to the rate of oxide scale formation and, when the oxide scale falls off, turns negative. The amounts of mass change ($\Delta W_x$) were plotted as an increase by oxidation on a graph at each holding time, and the state of oxide scale formation and separation was numerically determined for each time for evaluating high-temperature oxidation resistance. The following equation (1) was used for calculation. FIG. 2 presents the results.

$$\Delta W_x = (W_x - W_0)/A_0 \qquad \text{Equation (1)}$$

The results presented in FIG. 2 show that the high-temperature oxidation resistances of Ni-based alloys 1 to 5, which are invention examples, were superior to that of Ni-based alloy 11, which is a comparative example. In particular, the high-temperature oxidation resistance of Ni-based alloy 4 was similar to that of Ni-based alloy 10, suggesting that the Ni-based alloy could maintain its excellent high-temperature oxidation resistance even though the Cr content was reduced.

EXAMPLE 2

The plates of Ni-based alloys 1, 4, 5, 10, and 11 produced in Example 1, each having dimensions of 25 mm in thickness and 50 mm in width, were machined into plates with a thickness of 7 mm, a width of 17 mm, and a length of 60 mm. The resulting plates were heat-treated by air-cooling from 900°C under the assumption of the form of the final product (that is, for grain refinement in the microstructure). The heat-treated plates were worked into metal pieces with a thickness of 7 mm, a width of 17 mm, and a length of 17 mm by machining.

Then, the surfaces of the metal pieces were polished and finally finished with a #320 water-resistant emery paper, thus producing test pieces with a thickness of 5 mm, a width of 15 mm, and a length of 15 mm, three for each alloy. The polished test pieces were degreased using ultrasonic cleaning by being immersed in a metal cleaner and a Fine Solve (both produced by Sankyo Chemical Co., Ltd.) and ethanol in this order. Then, the surface area ($A_0$) was calculated by measuring the entire surface of the test piece, and the initial mass ($W_0$) before the test was also measured. Then, the test pieces were subjected to oxidation tests in the same manner as in Example 1. The test temperature was set at 700°C, and the number of thermal cycles was one with a holding time of 100 h (number of cycles X = 1).

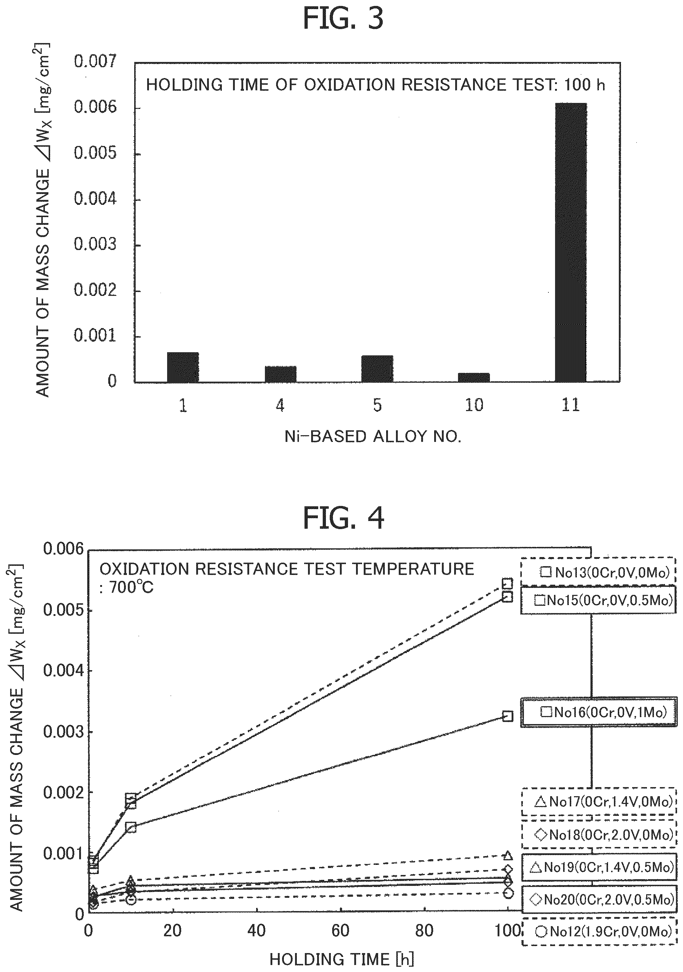

After the oxidation test, the amount of mass change per surface area ($\Delta W_x$) of the test pieces was calculated, and the results are presented in FIG. 3. The calculated amount of mass change ($\Delta W_x$) is the average of the values obtained for the three test pieces of each alloy. The Ni-based alloys of invention examples could sufficiently maintain their excellent high-temperature oxidation resistance even though the Cr content was reduced.

EXAMPLE 3

Materials were blended in predetermined proportions, melted in a vacuum melting furnace, and then cast to produce 10 kg of a Ni-based alloy ingot having the alloy composition presented in Table 2. Alloy 12 corresponds to the Ni-based alloy of Patent Document 1. Alloy 13 corresponds to the Ni-based alloy of Patent Document 2. Alloys 14 to 16 are the Ni-based alloys for comparison and contain no V but contain Mo.

Subsequently, the resulting ingot was heated to a temperature of 1200°C and, in this state, subjected to hot forging to produce a plate with dimensions of 25 mm in thickness and 50 mm in width. At this time, the temperature of the resulting plate was about 800°C at the end of hot forging. All the Ni-based alloys could be forged to the above dimensions without cracking or other problems. The resulting forged material was further worked into a plate with a thickness of 7 mm, a width of 17 mm, and a length of 60 mm by machining. The resulting plate was heat-treated by air-cooling from 900°C under the assumption of the form of the final product (that is, for grain refinement in the microstructure) and then machined into a metal piece with a thickness of 7 mm, a width of 17 mm, and a length of 17 mm.

Table 2

| No. | Element composition (mass%) | | | | | | | | | Note |
|---|---|---|---|---|---|---|---|---|---|---|
| | Al | Si | Cr | Mn | V | B | Zr | Mo | Ni* | |
| 12 | 3.9 | 1.4 | 1.9 | 0.5 | - | 0.004 | 0.01 | - | Bal. | Comparative Example |
| 13 | 3.9 | 1.4 | - | 0.5 | - | 0.004 | 0.01 | - | Bal. | |
| 14 | 4.0 | 1.4 | - | 0.5 | - | 0.003 | 0.01 | 0.25 | Bal. | |
| 15 | 4.0 | 1.4 | - | 0.5 | - | 0.004 | 0.01 | 0.5 | Bal. | |
| 16 | 4.0 | 1.4 | - | 0.5 | - | 0.006 | 0.01 | 1.0 | Bal. | |
| 17 | 4.0 | 1.4 | - | 0.4 | 1.4 | 0.004 | 0.01 | - | Bal. | Invention Example |
| 18 | 4.0 | 1.4 | - | 0.4 | 2.0 | 0.003 | 0.01 | - | Bal. | |
| 19 | 4.1 | 1.4 | - | 0.4 | 1.4 | 0.004 | 0.01 | 0.5 | Bal. | |
| 20 | 4.0 | 1.4 | - | 0.4 | 2.0 | 0.004 | 0.01 | 0.5 | Bal. | |
| 21 | 4.0 | 1.4 | - | 0.4 | 0.9 | 0.004 | 0.01 | 0.5 | Bal. | |
| 22 | 3.8 | 1.4 | - | 0.5 | 0.5 | 0.003 | 0.01 | 0.5 | Bal. | |
| 23 | 4.0 | 1.4 | - | 0.4 | 1.4 | 0.004 | 0.01 | 1.0 | Bal. | |
| 24 | 4.0 | 1.5 | - | 0.4 | 1.4 | 0.004 | 0.01 | 0.24 | Bal. | |
| 25 | 4.0 | 1.4 | - | 0.4 | 0.9 | 0.004 | 0.01 | 0.25 | Bal. | |
| 26 | 3.9 | 1.4 | - | 0.5 | 0.5 | 0.004 | 0.01 | 0.25 | Bal. | |
| * Inclusive of impurities | | | | | | | | | | |

For the above-described Ni-based alloys 12 to 16 (comparative examples) and 17 to 26 (invention examples), the surfaces of the metal pieces were polished and finally finished with a #320 water-resistant emery paper, thus producing test pieces with a thickness of 5 mm, a width of 15 mm, and a length of 15 mm, three for each alloy. The polished test pieces were degreased and subjected to the calculation of their surface area ($A_0$) and measurement of the initial mass ($W_0$) before tests in the same manner as in Example 1. Then, oxidation tests were conducted for evaluating high-temperature oxidation resistance. The tests were conducted at 700°C, and the holding time was set at 1 h, 10 h, and 100 h. After the oxidation test, the amount of mass change per surface area ($\Delta W_x$) of the test pieces was calculated. The calculated amount of mass change ($\Delta W_x$) is the average of the values of the three test pieces of each alloy.

FIG. 4 shows the relationship between the holding time and the amount of mass change ($\Delta W_x$). The elements not contained are represented as "0"%. The results of alloys 14 and 21 to 26 are omitted. First, alloys 13, 15, and 16 were compared, and the results showed that the presence of Mo in Ni-based alloys reduces the amount of mass change ($\Delta W_x$) exhibited in alloy 13, which is a known alloy, even though V is not added. However, the reduction in mass change was not as great as those of alloys 17 to 20 as invention examples, which contain V.

Among alloys 17 to 20 according to the present invention, alloys 19 and 20, to which Mo is further added, exhibited smaller amounts of mass change ($\Delta W_x$) than alloys 17 and 18. The amounts of mass change ($\Delta W_x$) of alloy 12, a known alloy, are small because of the presence of a large amount of Cr, whereas the amounts of mass change ($\Delta W_x$) of alloy 20 are reduced to the level comparable to those of alloy 12. Thus, it is confirmed that the present invention in which the addition of V and further addition of Mo are combined is effective in improving oxidation resistance.

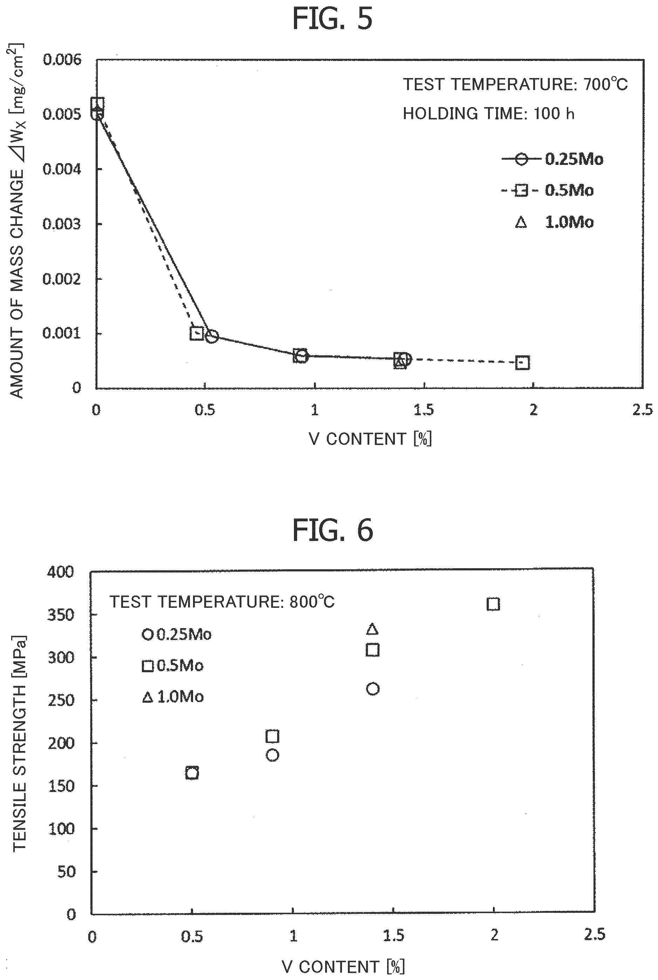

With regard to the above results, FIG. 5 shows the relationship between the V content and the amount of mass change ($\Delta W_x$) at a holding time of 100 h for each Mo content of Mo-containing Ni-based alloys. In FIG. 5, circular marks indicate alloys containing about 0.25% of Mo (alloys 14, 24, 25, and 26); square marks indicate alloys containing about 0.5% of Mo (alloys 15, 19, 20, 21, and 22); and triangular marks indicate an alloy containing about 1.0% of Mo (alloy 23). These results show, first, that the amount of mass change ($\Delta W_x$) decreases significantly when an amount of V is added up to around 0.5%. Also, it is shown that when the V content is increased to around 1.0%, the amount of mass change ($\Delta W_x$) further decreases. In addition, comparisons between alloys 14 and 15, which do not contain V, and the other alloys suggest that only when Mo is added to the Ni-based alloy containing an amount of V, according to the present invention, the addition of Mo can produce the effect of improving oxidation resistance.

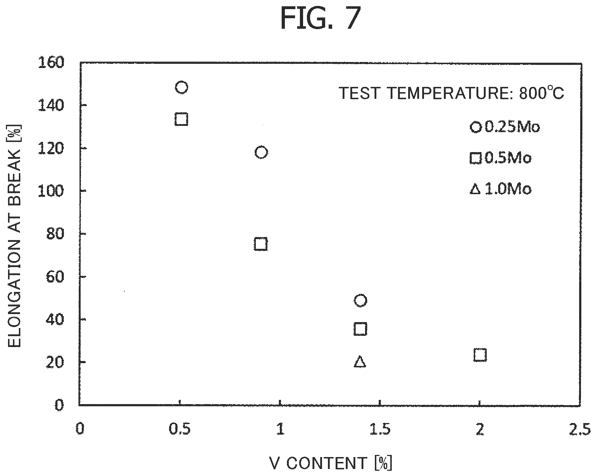

Furthermore, to confirm that the Ni-base alloys of the present invention could be forged without cracking or other problems in the hot forging operation described above, Ni-based alloys discussed in FIG. 5 other than alloys 14 and 15 were subjected to tensile tests at 800°C, which is the assumed forging end temperature. The results are presented in FIGs. 6 and 7. Basically, increasing the amount of V increases the tensile strength of the Ni-based alloys and reduces the elongation at break of the alloys. The tensile strength and the elongation at break are 360 MPa or less and 20% or more, respectively, from which sufficient hot workability is determined to be maintained.

**Claims**

1. A Ni-based alloy having excellent high-temperature oxidation resistance, comprising, by mass,

   2.0% to 5.0% of Al,
   0.1% to 2.5% of Si,
   0.1% to 1.5% of Mn,
   0.4% to 3.0% of V,
   0.001% to 0.05 % of B,
   0.001% to 0.1% of Zr, and
   the balance of Ni with inevitable impurities.

2. The Ni-based alloy having excellent high-temperature oxidation resistance according to claim 1, wherein the Ni-based alloy comprises 1.0% to 3.0% by mass of V.

3. The Ni-based alloy having excellent high-temperature oxidation resistance according to claim 1 or 2, further comprising 2.0% by mass or less of Mo.

# FIG. 1

# FIG. 2

## FIG. 3

## FIG. 4

## FIG. 5

## FIG. 6

# FIG. 7

## INTERNATIONAL SEARCH REPORT

| International application No. |
| --- |
| **PCT/JP2023/025822** |

| | |
| --- | --- |
| **A.** | **CLASSIFICATION OF SUBJECT MATTER** |

*C22C 19/03*(2006.01)i; *C22F 1/00*(2006.01)i; *C22F 1/10*(2006.01)i
FI: C22C19/03 Z; C22F1/00 623; C22F1/00 625; C22F1/00 626; C22F1/00 630K; C22F1/00 631A; C22F1/00 640B;
C22F1/00 651Z; C22F1/00 683; C22F1/00 691B; C22F1/00 692A; C22F1/10 A; C22F1/10 Z

According to International Patent Classification (IPC) or to both national classification and IPC

| | |
| --- | --- |
| **B.** | **FIELDS SEARCHED** |

Minimum documentation searched (classification system followed by classification symbols)

    C22C19/03; C22F1/00; C22F1/10

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2014-80675 A (MMC SUPER ALLOY CO., LTD.) 08 May 2014 (2014-05-08)<br>entire text | 1-3 |
| A | JP 2015-45035 A (HITACHI METALS MMC SUPERALLOY, LTD.) 12 March 2015 (2015-03-12)<br>entire text | 1-3 |
| A | WO 2020/179388 A1 (HITACHI METALS LTD.) 10 September 2020 (2020-09-10)<br>entire text, all drawings | 1-3 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 578 971 A1

**INTERNATIONAL SEARCH REPORT**
Information on patent family members

International application No.

**PCT/JP2023/025822**

| Patent document cited in search report | | | Publication date (day/month/year) | Patent family member(s) | | | Publication date (day/month/year) |
|---|---|---|---|---|---|---|---|
| JP | 2014-80675 | A | 08 May 2014 | US | 2016/0215367 | A1 | |
| | | | | WO | 2015/029484 | A1 | |
| | | | | EP | 3040432 | A1 | |
| | | | | CN | 105793452 | A | |
| JP | 2015-45035 | A | 12 March 2015 | US | 2016/0215367 | A1 | |
| | | | | WO | 2015/029484 | A1 | |
| | | | | EP | 3040432 | A1 | |
| | | | | CN | 105793452 | A | |
| WO | 2020/179388 | A1 | 10 September 2020 | US | 2022/0143690 | A1 | |
| | | | | EP | 3936257 | A1 | |
| | | | | CN | 113490560 | A | |

Form PCT/ISA/210 (patent family annex) (January 2015)

**EP 4 578 971 A1**

**Patent documents cited in the description**

- JP 2014080675 A

- JP 2015045035 A